# EUROPEAN PATENT APPLICATION

(11) **EP 3 361 774 A1**
(43) Date of publication of application: **15.08.2018**
(21) Application number: 17198053.5
(22) Date of filing: 24.10.2017
(51) Int. Cl.: H04W 28/08, H04W 40/24

(54) **NODE LOAD BALANCING**

(30) Priority: 08.02.2017 US 201715427567
(71) Applicant: Aruba Networks, Inc., Santa Clara, CA 95054 (US)
(72) Inventor: KILLADI, Srinivas Rao, 560103 Bangalore, Karnataka (IN)
(74) Representative: Haseltine Lake LLP

(57) **Abstract**

Example implementations relate to node load balancing. In some examples, an apparatus may comprise a processing resource that may execute instructions to determine that a first station is authenticated to a first node and authenticate the first station to a second node in response to a load balancing operation being triggered, wherein the second node is layer 2 (L2) connected to the first node. The processing resource may execute instructions to update an index associated with the apparatus in response to the first station being authenticated to the second node.

## Description

### Background

Wireless networks may be deployed to provide various types of communication to multiple users through the air using electromagnetic waves. As a result, various types of communication may be provided to multiple users without cables, wires, or other physical electric conductors to couple devices in the wireless network. Examples of the various types of communication that may be provided by wireless networks include voice communication, data communication, multimedia services, etc.

A wireless network may include a computing node, which may have a station connected thereto. The node may be connected to other nodes via a layer 2 and/or a layer 3 interface.

### Brief Description of the Drawings

Figure 1A illustrates a diagram of an example of a wireless network consistent with the disclosure.
Figure 1B illustrates another diagram of an example of a wireless network consistent with the disclosure.
Figure 1C illustrates another diagram of an example of a wireless network consistent with the disclosure.
Figure 2 illustrates an example apparatus for node load balancing consistent with the disclosure.
Figure 3 illustrates a diagram of an example of a non-transitory computer readable medium for node load balancing consistent with the disclosure.
Figure 4 illustrates an example flow diagram for node load balancing consistent with the disclosure.

### Detailed Description

An example of a wireless network is a wireless local area network (WLAN). As used herein, wireless local area network (WLAN) generally refers to a communications network that links two or more devices using some wireless distribution method (for example, spread-spectrum or orthogonal frequency-division multiplexing radio), and usually providing a connection through an access point to the Internet; and thus, providing users with the mobility to move around within a local coverage area and still stay connected to the network. WLANs may include multiple stations (STAs), controllers (e.g., WLAN controller(s)), and/or access points (APs) that may communicate over a plurality of wireless channels. An AP may be a networking hardware device that allows a wireless-compliant device (e.g., a STA) to connect to a network, while a controller may perform configuration operations and/or authentication operations on APs and/or STAs.

An AP may provide connectivity with a network such as the Internet to the STAs. As used herein, AP generally refers to receiving points for any known or convenient wireless technology which may later become known. Specifically, the term AP is not intended to be limited to Institute of Electrical and Electronics Engineers (IEEE) 802.11-based APs. APs generally function as an electronic device that is adapted to allow wireless devices to connect to a wired network via various communications standards. As used herein, a STA is a device that has the capability to use the Institute of Electrical and Electronics Engineers (IEEE) 802.11 protocol. Examples of STAs include smart phones, laptops, physical non-virtualized computing devices, personal digital assistants, etc. In some examples, a STA may be a device that contains an IEEE 802.11-conformant media access control (MAC) and physical layer (PHY) interface to a wireless medium (WM). As used herein, a controller generally refers to a WLAN controller that performs load balancing operations, authentication operations, interference detection and avoidance operations, and/or coverage hole detection and correction operations for the network.

Wireless networks such as WLANs can use various wireless communication technologies. In some examples, WLANs can use orthogonal frequency division multiplexing (OFDM). In an OFDM based wireless network, a data stream is split into multiple data substreams. Such data substreams may be sent over different OFDM subcarriers, which can be referred to as tones or frequency tones. Some wireless networks may use a single-in-single-out (SISO) communication approach, where each STA and/or AP uses a single antenna. Other wireless networks may use a multiple-in-multiple-out (MIMO) communication approach, where a STA and/or AP uses multiple transmit antennas and multiple receive antennas. For example, some wireless networks may include controllers, APs, and/or STAs that may be used to facilitate communication in the network. Such networks may allow for multiple user (MU) MIMO communication. WLANs such as those defined in the IEEE wireless communications standards (e.g., IEEE 802.11 a, IEEE 802.11n, IEEE 802.11 ac, etc.), can use OFDM to transmit and receive signals. Moreover, WLANs, such as those based on the IEEE 802.11 n or IEEE 802.11 ac standards, can use OFDM and MIMO.

Load balancing operations (e.g., user load balancing) may be performed on a wireless network. For example, a controller associated with a wireless network may facilitate load balancing operations to distribute workloads across multiple computing resources such as STAs, computer clusters, network links, etc.

In some approaches, STAs may be load balanced once certain load balance thresholds are met. For example, in some approaches, a load balancing operation may be performed without taking into consideration the connectedness of the nodes involved in the load balancing operation. As an example, whether or not the nodes are connected via a layer 2 (L2) protocol or a layer 3 (L3) protocol may not be taken into consideration in some approaches to performing node load balancing. This may result in deauthentication of STAs if the load balancing is performed on nodes that are not L2 connected (e.g., nodes that are L3 connected). As used herein, "deauthentication" refers to termination of a secure session between a STA and a node and/or AP, while "authentication" refers to initiation of a secure session between a STA and a node and/or AP. In some examples, this may result in network disruption of a STA and, consequently disruption of an end user. In contrast, in some examples of the disclosure, L2 connectedness may be considered prior to commencement of a load balancing operation(s). This may help to load balance users between L2 connected nodes and/or L3 connected nodes.

In some approaches, if a cluster of nodes includes a mix of L2 and L3 connected nodes, node connectedness (e.g., node status) may not be considered prior to performing load balancing. For example, in some approaches, indices associated with the nodes (e.g., bucket indices, mac hash indices, etc.) may be updated (e.g., switched, swapped, etc.) without worrying about the status of the STA after the load balancing operation is performed.

In contrast, in some examples, the connectedness of the nodes involved in the load balancing operation may be considered. For example, nodes which are L2 connected may be used for load balancing so that a load balance operation may not disrupt network services of the STAs. In some examples, prior to performing a load balancing operation, L2 connectedness of the node between which load balancing is to be applied may be validated. For example, nodes may be selected that are L2 connected for index updating (e.g., bucketmap swapping), which may be performed to ensure that a STA does not get deauthenticated.

In some examples, network outage for STAs may be reduced while performing load balancing as compared to some approaches. For example, since the load balancing may be performed between L2 connected nodes, STAs may not be deauthenticated while performing a load balancing operation.

Examples of the disclosure include apparatuses, methods, and machine-readable media storing executable instructions for node load balancing. In some examples, an apparatus may comprise a processing resource. The processing resource may execute instructions to perform various tasks. For example, the processing resource may execute instructions to determine that a first station is authenticated to a first node, and authenticate the first station to a second node in response to a load balancing operation being triggered, wherein the second node is L2 connected to the first node. In some examples, the processing resource may execute instructions to update an index associated with the apparatus in response to the first station being authenticated to the second node.

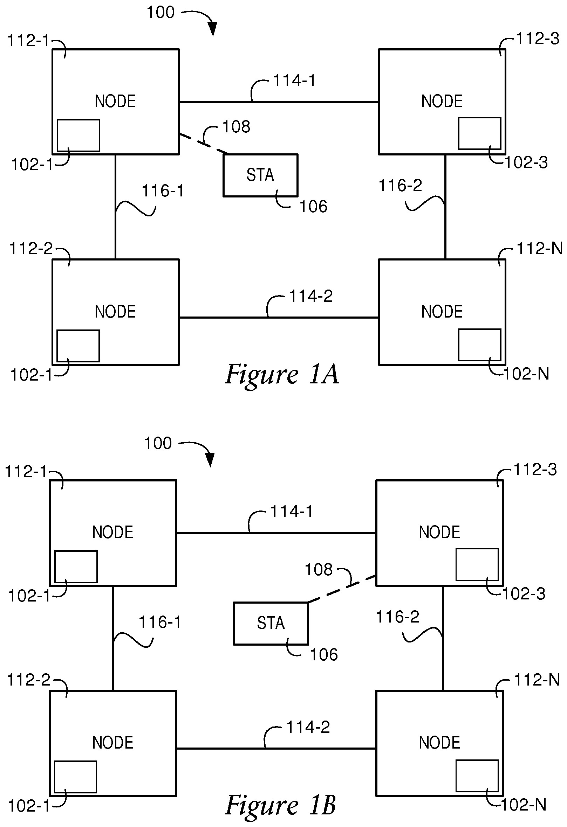

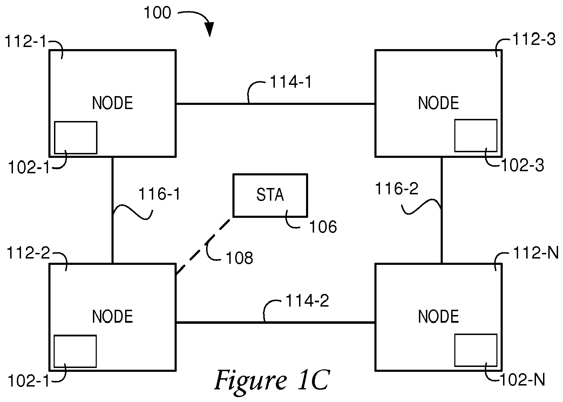

Turning now to the figures, Figures 1A, 1B, and 1C illustrate diagrams of an example of a wireless network 100 consistent with the disclosure. As shown in Figures 1A-1C, the network includes a plurality of nodes 112-1, ..., 112-N, with each respective node including a processing resource 102-1, ..., 102-N. The nodes may be connected to each other (e.g., may transmit data between each other) via a L2 protocol or a L3 protocol. For example, node 112-1 may be connected to node 112-3 via a L2 protocol 114-1, and node 112-2 may be connected to node 112-N via a L2 protocol 114-2. In some examples, node 112-1 may be connected to node 112-2 via a L3 protocol 116-1, and node 112-3 may be connected to node 112-N via a L3 protocol 116-2. The nodes 112-1, ..., 112-N may comprise controllers, APs, and/or combinations thereof.

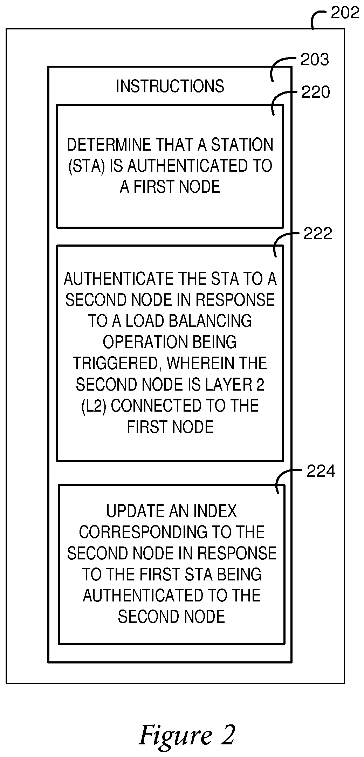

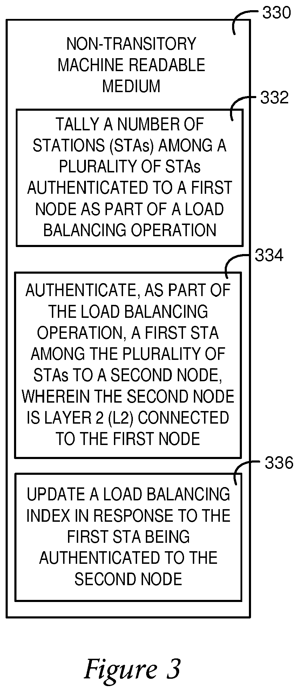

The processing resource(s) 102-1, ..., 102-N may execute instructions, as described in more detail in connection with Figure 2 and Figure 3, herein. In some examples, the processing resource(s) 102-1, ..., 102-N may be coupled to memory resource(s), which may store instructions executable by the processing resource(s) 102-1, ..., 102-N, as described in more herein.

In some examples, a station (STA) 106 may be authenticated to a node among the plurality of nodes 112-1, ..., 112-N; however, as part of a load balancing operation, the STA 106 may be subsequently authenticated to a different node among the plurality of nodes 112-1, ..., 112-N. For example, as shown in Figure 1A, STA 106 may be authenticated 108 to node 112-1. Subsequently, as part of a load balancing operation, STA 106 may be authenticated 108 to node 112-3, as shown in Figure 1B, or the STA 106 may be authenticated 108 to node 112-2, as shown in Figure 1C.

In the example of Figure 1B, node 112-1 and node 112-3 are connected via a L2 protocol 114-1, and the STA 106 that was previously authenticated to node 112-1 in Figure 1A has been authenticated 108 to node 112-3 as part of the load balancing operation. In some examples, based on a determination that node 112-1 and node 112-3 are connected via the L2 protocol 114-1, an index may be updated. For example, a respective index may correspond to respective nodes among the plurality of nodes 112-1, ..., 112-N, and the respective index may be updated (e.g., swapped) in response to the STA 106 being authenticated to node 112-3, because node 112-1 and node 112-3 are connected via the L2 protocol 114-1.

In the example of Figure 1C, node 112-1 and node 112-2 are connected via a L3 protocol 116-1, and the STA 106 that was previously authenticated to node 112-1 in Figure 1A has been authenticated 108 to node 112-2 as part of the load balancing operation. In some examples, based on a determination that node 112-1 and node 112-2 are connected via the L3 protocol 116-1, an index may not be updated. For example, a respective index may correspond to respective nodes among the plurality of nodes 112-1, ..., 112-N, and the respective index may not be updated (e.g., swapped) in response to the STA 106 being authenticated to node 112-2, because node 112-1 and node 112-2 are connected via the L3 protocol 116-1.

Figure 2 illustrates an example apparatus for node load balancing consistent with the disclosure. As shown in Figure 2, the apparatus may include a processing resource 202, which may execute instructions 203. In some examples, the instructions 203 may be stored on a non-transitory machine readable medium and/or a memory resource. The non-transitory machine readable medium and/or memory resource may be any type of volatile or non-volatile memory or storage, such as random access memory (RAM), flash memory, read-only memory (ROM), storage volumes, a hard disk, or a combination thereof.

At 220, the processing resource 202 may execute instructions 203 to determine that a first station (STA) is authenticated to a first node. For example, the processing resource 202 may execute instructions 203 to determine that the first STA is receiving authentication information from the first node and/or may be subject to a load balancing operation triggered by the first node. In some examples, the first node may be a network controller or an AP.

At 222, the processing resource 202 may execute instructions 203 to authenticate the first STA to a second node in response to a load balancing operation being triggered, wherein the second node is L2 connected to the first node. For example, the processing resource 202 may execute instructions 203 authenticate the first STA to the second node such that the STA receives authentication information from the second node and/or may be subject to a load balancing operation triggered by the second node. In some examples, the second node may be a network controller.

At 224, the processing resource 202 may execute instructions 203 to update an index associated with the apparatus in response to the first STA being authenticated to the second node. The index may be a bucketmap index and/or a mac hash index, and/or may comprise at least one of a first index associated with the first node and a second index associated with the second node.

In some examples, the processing resource 202 may further execute instructions 203 to determine that a second STA is authenticated to the first node, authenticate the second STA to a third node in response to a load balancing operation being triggered, wherein the third node is L3 connected to the first node, and not update the index corresponding to the third node in response to the second STA being authenticated to the third node. In some examples, by not updating the index corresponding to the third node, the STA may not be deauthenticated from the network.

In some examples, the load balancing operation may be triggered based, at least in part, on the first node having a threshold number of STAs authenticated thereto. For example, in response to a threshold number of STAs being authenticated to the first node being exceeded, the load balancing operation can be triggered and/or performed.

In some examples, the processing resource 202 may further execute instructions 203 to determine how many STAs are authenticated to the first node and how many STAs are authenticated to the second node as part of the load balancing operation being triggered.

Figure 3 illustrates a diagram of an example of a non-transitory computer readable medium for node load balancing consistent with the disclosure. A computer processor (e.g., a hardware processing resource) may execute instructions stored on the non-transitory machine readable medium 330. The non-transitory machine readable medium 330 may be any type of volatile or non-volatile memory or storage, such as random access memory (RAM), flash memory, read-only memory (ROM), storage volumes, a hard disk, or a combination thereof.

The example medium 330 may store instructions 332 executable by a computer processor to tally a total number of stations (STAs) among a plurality of STAs authenticated to a first node as part of a load balancing operation. For example, the instructions may be executable by a processing resource to count a total number of STAs that are authenticated to the first node and/or store an indication of a total number of STAs that are authenticated to the first node. In some examples, counting a total number of STAs that are authenticated to the first node may include determining how many STAs are authenticated to the first node.

The example medium 330 may store instructions 334 executable by a computer processor to authenticate, as part of the load balancing operation, a first STA among the plurality of STAs to a second node, wherein the second node is L2 connected to the first node. For example, the example medium 330 may store instructions executable by a processing resource determine that the first STA among the plurality of STAs is receiving authentication information from the second node and/or may be subject to a load balancing operation triggered by the second node.

The example medium 330 may store instructions 336 executable by a computer processor to update a load balancing index in response to the first STA being authenticated to the second node. The index may be a bucketmap index, hashmap index, and/or mac hash, and/or may comprise at least one of a first index associated with the first node and a second index associated with the second node.

The example medium 330 may further store instructions executable by a computer processor to authenticate as part of the load balancing operation, a second STA among the plurality of STAs to a third node, determine whether the third node is L2 connected to the first node, and update the load balancing index in response to a determination that the third node is L2 connected to the first node. For example, the example medium 330 may store instructions executable by a processing resource determine that the second STA among the plurality of STAs is receiving authentication information from the third node and/or may be subject to a load balancing operation triggered by the third node.

The example medium 330 may further store instructions executable by a computer processor to authenticate, as part of the load balancing operation, a second STA among the plurality of STAs to a third node, determine whether the third node is L2 connected to the first node, and not update the load balancing index in response to a determination that the third node is not L2 connected to the first node.

In some examples, the example medium 330 may further store instructions executable by a computer processor to determine, as part of the load balancing operation, a respective threshold user limit for respective STAs among the plurality of STAs. The threshold user limit may be based on how many STAs are authenticated to respective nodes in the network.

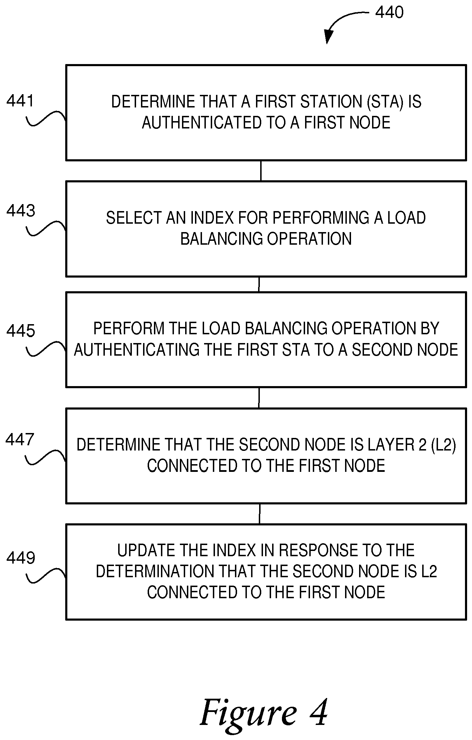

Figure 4 illustrates an example flow diagram 440 for node load balancing consistent with the disclosure. At 441, the method 440 may include determining that a first STA is authenticated to a first node. For example, the method 440 may include determining that the first STA is receiving authentication information from the first node and/or may be subject to a load balancing operation triggered by the first node.

At 443, the method 440 may include selecting an index for performing a load balancing operation. In some examples, the index may be a bucketmap index and/or a hashmap index, and/or may comprise at least one of a first index associated with the first node and a second index associated with the second node.

At 445, the method 440 may include performing the load balancing operation by authenticating the first STA to a second node. For example, the method 440 may include determining that the first STA is receiving authentication information from the second node and/or may be subject to a load balancing operation triggered by the second node.

At 447, the method 440 may include determining that the second node is L2 connected to the first node, and, at 449, the method 440 may include updating the index in response to the determination that the second node is L2 connected to the first node.

In some examples, the method 440 may further include determining that a second STA has been authenticated to a third node, determining that the third node is L3 connected to the first node, and not updating the index in response to the determination that the third node is L3 connected to the first node.

In some examples, the method 440 may include determining that the first node is not L2 connected to a different node, and selecting a second index for performing the load balancing operation based, at least in part, on the determination that the first node is not L2 connected to the different node. In some examples, the method 440 may include performing the load balancing operation by authenticating a third STA to a node that is different than the first node, determining that the node that is different than the first node is L2 connected to a node associated with the second index, and updating the second index in response to the determination that the node that is different than the first node is L2 connected to the node associated with the second index.

In the foregoing detailed description of the disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the disclosure. As used herein, designators such as "N", etc., particularly with respect to reference numerals in the drawings, indicate that a number of the particular feature so designated can be included. A "plurality of" is intended to refer to more than one of such things. Multiple like elements may be referenced herein by their reference numeral without a specific identifier at the end. For example, a plurality of nodes 112-1, ..., 112-N may be referred to herein as nodes 112.

The figures herein follow a numbering convention in which the first digit corresponds to the drawing figure number and the remaining digits identify an element or component in the drawing. For example, reference numeral 102 may refer to element "02" in Figure 1 and an analogous element may be identified by reference numeral 202 in Figure 2. Elements shown in the various figures herein can be added, exchanged, and/or eliminated so as to provide a number of additional examples of the disclosure. In addition, the proportion and the relative scale of the elements provided in the figures are intended to illustrate the examples of the disclosure, and should not be taken in a limiting sense.

As used herein, "logic" is an alternative or additional processing resource to perform a particular action and/or function, etc., described herein, which includes hardware, for example, various forms of transistor logic, application specific integrated circuits (ASICs), etc., as opposed to computer executable instructions, for example, instructions, etc., stored in memory and executable by a processor.

## Claims

1. An apparatus, comprising a processing resource; and
a memory resource storing machine readable instructions to cause the processing resource to:
determine that a first station is authenticated to a first node;
authenticate the first station to a second node in response to a load balancing operation being triggered, wherein the second node is layer 2 (L2) connected to the first node; and
update an index associated with the apparatus in response to the first station being authenticated to the second node.

2. The apparatus of claim 1, wherein the machine readable instructions are to cause the processing resource to:
determine that a second station is authenticated to the first node;
authenticate the second station to a third node in response to a load balancing operation being triggered, wherein the third node is layer 3 (L3) connected to the first node;
not update the index corresponding to the third node in response to the second station being authenticated to the third node.

3. The apparatus of claim 1, wherein the index is a bucketmap index.

4. The apparatus of claim 1, wherein the index comprises at least one of a first index associated with the first node and a second index associated with the second node.

5. The apparatus of claim 1, wherein the load balancing operation is triggered based, at least in part, on the first node having a threshold number of stations authenticated thereto.

6. The apparatus of claim 1, wherein the first node comprises a network controller and wherein the second node comprises a network controller.

7. The apparatus of claim, wherein the machine readable instructions are to cause the processing resource to determine how many stations are authenticated to the first node and how many stations are authenticated to the second node as part of the load balancing operation being triggered.

8. A non-transitory machine-readable medium having stored thereon machine readable instructions to cause a computer processor to:
tally a total number of stations (STAs) among a plurality of STAs authenticated to a first node as part of a load balancing operation;
authenticate, as part of the load balancing operation, a first STA among the plurality of STAs to a second node, wherein the second node is layer 2 (L2) connected to the first node; and
update a load balancing index in response to the first STA being authenticated to the second node.

9. The non-transitory machine-readable medium of claim 8, wherein the machine readable instructions are to cause the computer processor to:
authenticate as part of the load balancing operation, a second STA among the plurality of STAs to a third node;
determine whether the third node is L2 connected to the first node;
update the load balancing index in response to a determination that the third node is L2 connected to the first node.

10. The non-transitory machine-readable medium of claim 8, wherein the machine readable instructions are to cause the computer processor to:
authenticate, as part of the load balancing operation, a second STA among the plurality of STAs to a third node;
determine whether the third node is layer 2 (L2) connected to the first node;
not update the load balancing index in response to a determination that the third node is not L2 connected to the first node.

11. The non-transitory machine-readable medium of claim 8, wherein the machine readable instructions are to cause the computer processor to determine, as part of the load balancing operation, a respective threshold user limit for respective STAs among the plurality of STAs.

12. A method, comprising:
determining that a first station (STA) is authenticated to a first node;
selecting an index for performing a load balancing operation;
performing the load balancing operation by authenticating the first STA to a second node;
determining that the second node is layer 2 (L2) connected to the first node; and
updating the index in response to the determination that the second node is L2 connected to the first node.

13. The method of claim 12, further comprising:
determining that a second STA has been authenticated to a third node;
determining that the third node is layer 3 (L3) connected to the first node; and
not updating the index in response to the determination that the third node is L3 connected to the first node.

14. The method of claim 12, further comprising:
determining that the first node is not L2 connected to a different node; and
selecting a second index for performing the load balancing operation based, at least in part, on the determination that the first node is not L2 connected to the different node.

15. The method of claim 14, further comprising:
performing the load balancing operation by authenticating a third STA to a node that is different than the first node;
determining that the node that is different than the first node is L2 connected to a node associated with the second index; and
updating the second index in response to the determination that the node that is different than the first node is L2 connected to the node associated with the second index.
